# EUROPEAN PATENT SPECIFICATION

(11) **EP 3 100 814 B1**
(45) Date of publication and mention of the grant of the patent: **25.12.2019**
(21) Application number: 16176630.8
(22) Date of filing: 13.01.2011
(51) Int. Cl.: B23K 9/32, B23K 9/133, B65H 49/08, B65H 57/18, B65D 85/04, B23K 35/02, B23K 9/18, B65H 49/38

(54) **CONTAINER WITH WELDING WIRE COIL**
BEHÄLTER MIT SCHWEISSDRAHTSPULE
RÉCIPIENT AVEC BOBINE DE FIL DE SOUDAGE

(43) Date of publication of application: 07.12.2016
(62) Divisional of application: 11000236.7
(73) Proprietor: SIDERGAS SpA, 37010 S. Ambrogio di Valpolicella (IT)
(72) Inventor: Gelmetti, Carlo, 37017 Lazise (IT)
(74) Representative: Prinz & Partner mbB

(56) References cited:
- EP-A1- 2 256 064
- WO-A1-98/52844
- JP-A- 7 247 058
- JP-A- 2005 169 499
- US-A- 3 119 042
- US-A1- 2007 175 786

## Description

The invention relates to a container for a welding wire coil, in particular for a welding wire coil consisting of a length of welding wire with a diameter of 2.00 mm or more.

Welding wire with these diameters can be used for submerged arc welding. A problem with these welding wires is that they have to be introduced into the welding equipment (feeder, wire guiding system, welding torch, etc.). The problem is that in particular in the wire guiding system, the welding wire is subjected to bends. Wire having a diameter of 2.00 mm or more (diameters can go up to 6.00 mm and in some cases even beyond) can however hardly be fed through the guiding hoses, etc. There were attempts to use wire pushing systems to solve this problem, but without convincing success.

JP 2005 169499 A describes a container for welding wire according to the preamble of claim 1 and having a supporting structure made from metal. The container has an octagonal cross section and is constituted of a lower and an upper ring, which are connected by vertically extending metal bars. The container may also have intermediate rings for stabilization.

In order to be able to handle welding wire with these diameters of 2.00 mm or more, the invention proposes a container for accommodating an amount of welding wire, having a metal cage with a floor portion and a side portion extending from the floor portion, and having a cardboard wall associated to the side portion of the metal cage, wherein the metal cage has an octagonal cross section and the cardboard wall consists of eight segments. This container is based on the idea of assigning the different objects of the container to different elements. The metal cage is provided for achieving the mechanical stability which is required for receiving the welding wire coil and holding it during transportation and handling. The cardboard wall is provided for protecting the welding wire coil against contamination and dirt. Using different elements for the different tasks allows to have a container which can be manufactured quickly and without significant costs since all components can be welded to each other in order to combine reduced expenditure for manufacturing with high mechanical strength.

Preferably, the components of the metal cage are simply welded to each other. The floor portion can consist of four flat metal bars which are arranged pairwise perpendicularly with respect to each other, and the side portion of the metal cage can consist of eight metal tubes which are welded to the ends of the four metal bars. Thereby, the cage can be formed very quickly.

In order to increase the stability, a reinforcement ring can be provided at an end of the side portion which is opposite the floor portion. The reinforcement ring preferably is made from a metal strip which is welded to the tubes.

The cardboard wall is preferably formed in a single piece which extends around the side portion of the metal cage. This allows to simply slip the cardboard wall over the metal cage during assembly.

In order to also close the floor of the container, a cardboard floor is associated to the floor portion of the metal cage. The cardboard floor can be connected to the floor portion of the metal cage by means of supporting feet which are arranged underneath the container and which clamp the cardboard floor to the metal cage.

The supporting feet can be attached by means of bolts which extend from the interior of the container, and nuts which are accessible at an outer surface of the supporting feet. This allows to mount the supporting feet at the container in a simple manner, and also to detach the feet therefrom.

The supporting feet can be made from wood. Preferably, they are arranged at the container such that a forklift can be used for handling the container.

Preferably, a dome is provided which is arranged at the end of the side portion of the metal cage which is opposite the floor portion. The dome can be used for guiding the welding wire when it is withdrawn from the container.

Preferably, the dome is detachably connected to the metal frame. In particular, the dome can have a couple of legs which are inserted into the metal tubes forming the side portion of the metal cage. If necessary, locking pins can be used.

According to a preferred embodiment, a protective plastic bag is arranged between the side portion of the metal cage and the cardboard wall. The plastic bag prevents moisture from entering into the interior of the container.

The container is in particular suited for accommodating a welding wire coil made from welding wire having a diameter of more than 2.00 mm, preferably of 4.00 to 6.00 mm. Welding wire with this diameter, which is particularly suitable for sub-arc welding, requires a particularly strong container. The metal cage of the container according to the invention provides the required strength due to the metal cage which is able to receive the forces exerted by the welding wire coil.

Preferably, the welding wire coil placed in the container has an initial starting portion, the diameter of which is reduced as compared to the diameter of the remainder of the welding wire of the welding wire coil. The starting portion with reduced diameter facilitates insertion of the welding wire into a liner guiding the welding wire from the welding wire coil towards a welding torch.

The starting portion can have a length of 0.5 to 4 m, depending on the particular application. In some cases, it is sufficient to have just a short starting portion which is followed by welding wire with its nominal diameter. For other applications, insertion of the welding wire is greatly facilitated if the starting portion can be completely fed into the welding system until it exits at the welding torch and can be pulled through the welding system. Once the welding wire with the nominal diameter arrives at the welding torch, the starting portion is cut off.

For welding wire used for sub-arc welding, it has been found out that a diameter of approximately 2.00 mm for the starting portion provides very good performance.

The invention will now be described with reference to the enclosed drawings. In the drawings,
- Figure 1 schematically shows a container in a side view,
- Figure 2 schematically shows the metal cage in a top view with a welding wire coil placed therein,
- Figure 3 shows the metal cage in a perspective view,
- Figure 4 schematically shows a container with welding wire coil and retainer in a top view,
- Figure 5 schematically shows a container and a dome,
- Figure 5a schematically shows a detail of the connection of the dome to the metal cage, and

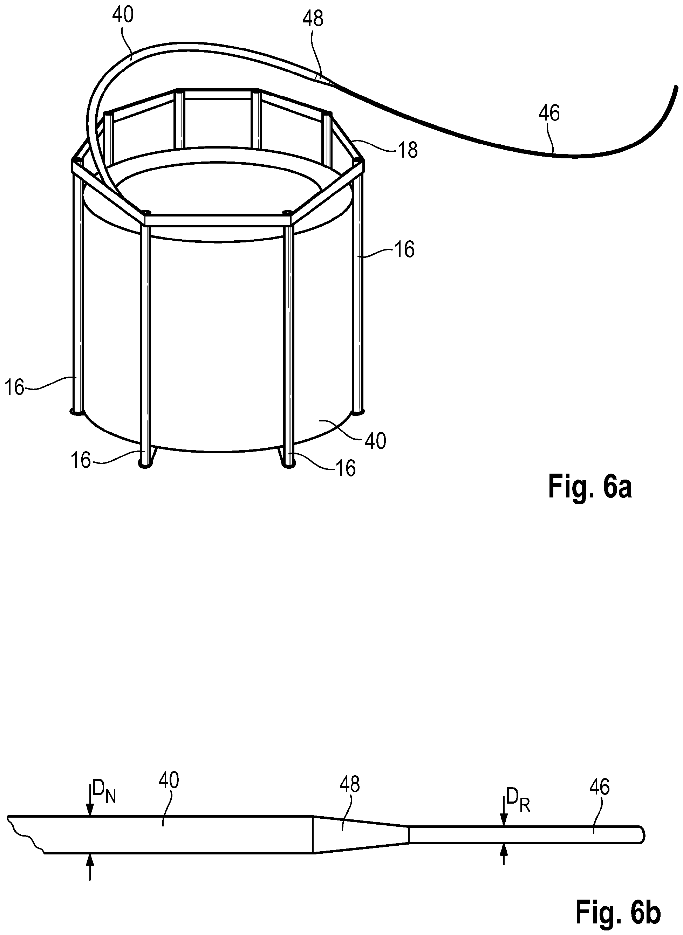

- Figure 6 schematically shows a welding wire coil with a starting portion.

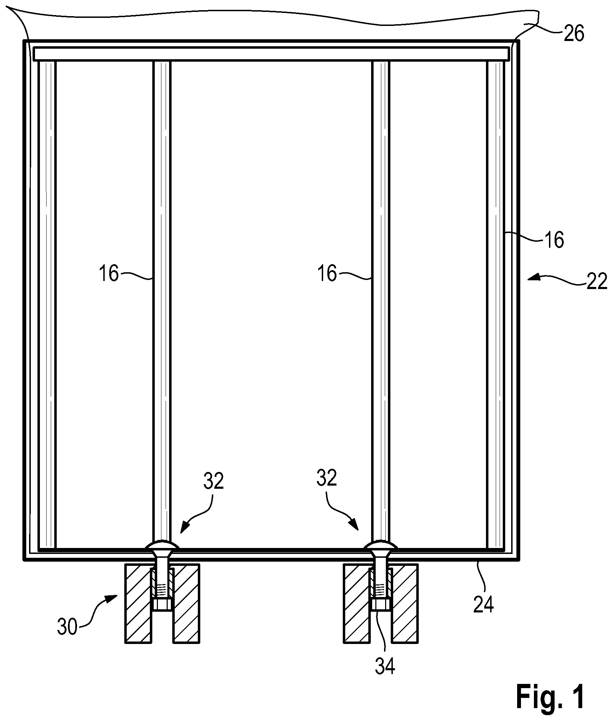

A container for accommodating a welding wire coil is shown in Figures 1 to 4. Basically, the container consists of three elements: A metal cage 10, a cardboard cover 20 and feet 30.

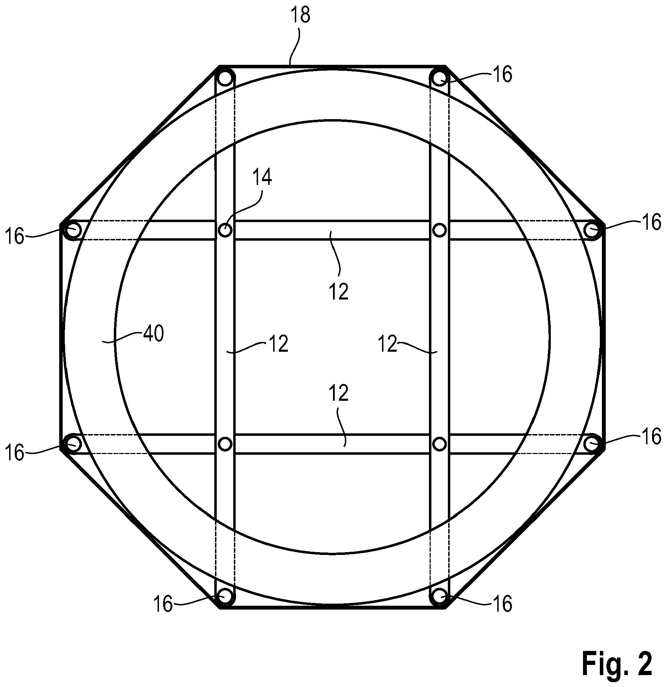

The metal cage 10 consists of a floor portion formed by four metal bars 12 arranged so as to form a grid (please see in particular Figure 2). The metal bars 12 are arranged such that their outer ends define the corners of an octagonal. At each junction of two metal bars 12, they are preferably welded to each other. Further, a bolt hole 14 is provided at each junction, which extends through both superimposed metal bars.

Metal cage 10 further comprises a side portion or side structure formed from eight metal tubes 16. The metal tubes 16 are connected with one of their ends to a respective end of metal bars 12 so that they extend perpendicularly therefrom upwardly.

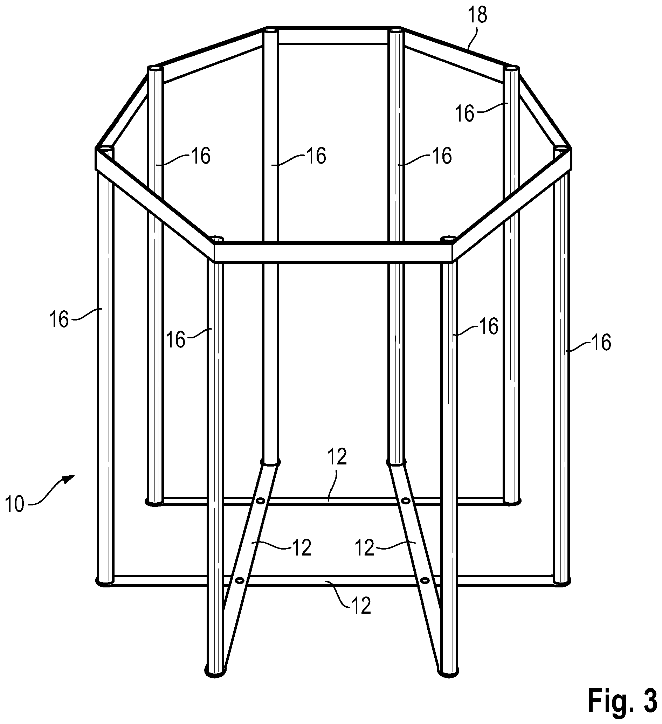

Finally, metal cage 10 comprises a reinforcement ring 18 which circumscribes the structure formed by the metal tubes 16 at their end which is opposite to the floor structure formed by metal bars 12. As can be seen in Figures 2 and 3, a metal frame is thereby formed which comprises a bottom formed by metal bars 12, a side structure formed by metal tubes 16 and an upper opening circumscribed by reinforcement ring 18. In a top view, the accommodation space within the metal cage has an octagonal cross section. All components can be welded to each other in order to combine reduced expenditure for manufacturing with high mechanical strength.

Cardboard cover 20 comprises of a cardboard wall 22 which covers the outer circumference of the side structure of the metal cage 10. Accordingly, cardboard wall 22 consists of eight segments each extending from one metal tube 16 to the adjacent one. Nevertheless, the entire cardboard wall 22 can be formed in a single, sleeve-like piece. Further, cardboard cover 20 comprises a cardboard floor 24 which is arranged underneath the floor portion of metal cage 10 and closes the underside of the container. Cardboard floor 24 is preferably provided separate from cardboard wall 22 and has a rim portion which outwardly circumscribes the lower edge of cardboard wall 22.

As can be seen in Figure 1, a protective plastic bag 26 is provided which extends between metal cage 10 and the cardboard wall 22 and cardboard floor 24. Protective plastic bag 26 ensures that moisture cannot enter into the interior of the container. Cardboard wall 22 in combination with cardboard floor 24 provides a mechanical seal against dirt and contamination.

As can be seen in Figure 1, wooden blocks 30 are provided which serve as supporting feet for the container. Wooden blocks 30 are connected to metal cage 10 by means of fastening bolts 32 which extends through bolt holes 14. The wooden blocks 30 are firmly attached to the metal cage by threading nuts 34 onto fastening bolts 32. The length of the fastening bolts is significantly shorter than the height of wooden blocks 30 so that nuts 34 are accommodated recessed within the wooden blocks. This ensures an electrical insulation between the metal cage and a floor on which the container is placed.

The wooden blocks can either be provided in the form of two long bars extending in parallel underneath the container, or in the form of four short sections. The first alternative provides more stability, but result in only two directions from which a forklift can be introduced. The second alternative results in a slightly reduced stability but allows introducing a forklift from four directions.

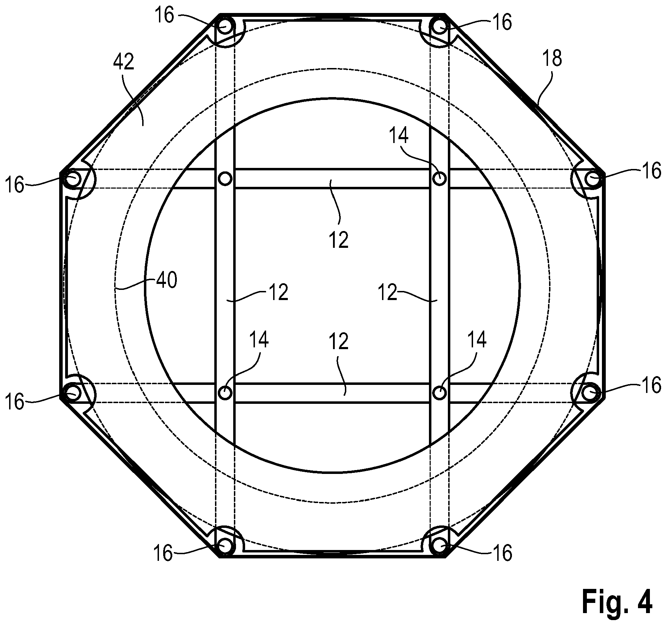

The container is intended to receive a large amount of welding wire 40 stored in the container in the form of a coil formed from a large number of welding wire loops. The coil formed from welding wire 40 is arranged such that it sits on the floor portion of the metal cage, namely on metal bars 12, and abuts with its outer circumferential surface at the eight metal tubes 16. The metal tubes 16, due to being connected to each other by means of metal bars 12 and reinforcement ring 18, can absorb the force which the individual welding wire loops exert on the metal cage in an radially outward direction. On top of the welding wire coil, a retainer 42 is preferably arranged. The retainer (please see in particular Figure 4) has a generally octagonal shape, with recesses being provided in each corner so as to allow the metal tubes 16 to pass through. Retainer 42 is generally plate-like with an interior opening 44 which is circular and has a diameter which is slightly smaller than the inner diameter of the coil formed from welding wire 40. Retainer 42 prevents that welding wire loops prematurely lift from the welding wire coil.

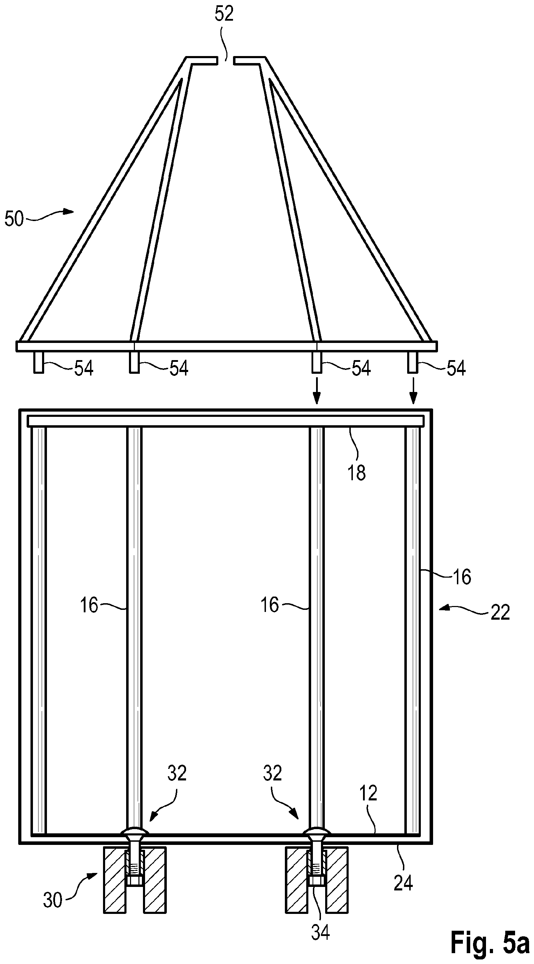

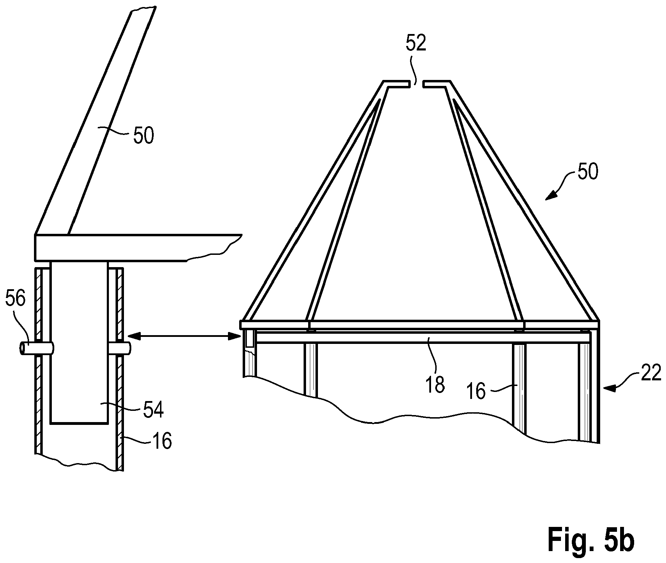

As can be seen in Figures 5a and 5b, a dome 50 can be used with the container, which has an upper opening 52 through which the welding wire can be withdrawn. Cage 50 is preferably a metal cage having a couple of legs 54 which are arranged and dimensioned so as to fit into the inner space of metal tubes 16 forming the corner reinforcements of the container. This allows to securely mount dome 50 to the container. If necessary, additional locking elements such as a pin 56 (please see Figure 4) can be used which extends through a bore both in the metal tube 16 of the metal cage and the leg 54 of dome 50. This prevents that dome 50 unintentionally becomes separated from the container during use.

The container is particularly suitable for receiving welding wire with a comparatively large diameter, in particular significantly exceeding a diameter of 2.00 mm. The metal cage is of sufficient strength to receive and hold welding wire having a diameter of 4.00 mm and even 6.00 mm and above. This type of welding wire is particularly suitable for sub-arc welding.

It has been experienced that welding wire with a diameter used for sub-arc welding cannot be easily inserted into sophisticated welding wire liners, in particular if these comprise a plurality of rolls and extend in curves having a small radius. In order to facilitate insertion of the welding wire into these liners, it is provided that the welding wire 40 of the coil has an initial insertion portion 46 whose diameter D_{R} is reduced as compared to the nominal diameter D_{N} of the remainder of the welding wire 40. This initial insertion portion 46 can have a diameter D_{R} of for example 2.00 mm while the nominal diameter D_{N} of the welding wire 40 is 4.00 or 6.00 mm. The insertion portion can be formed by gradually reducing the diameter in a transition portion 48 from the nominal diameter D_{N} to the reduced diameter D_{R}, for example by using a drawing die, and to integrally form the insertion portion with the reduced diameter. As an alternative, the welding wire can be provided with the transition portion 48, and a separate portion of welding wire with smaller diameter D_{N} can be butt-welded to the end of the transition portion 48 of the welding wire 40.

In any case, the insertion portion of the welding wire can be easily inserted into a liner so as to smoothly follow its curvatures when being pushed though the liner. As soon as the wire 40 with the nominal diameter D_{N} has arrived at the welding torch, the initial insertion portion 46 can be cut off, and welding can start.

A particular advantage of the container is that it can be assembled and disassembled in a very simple manner. The cardboard cover 20 is held at the metal cage 10 by means of the supporting feet 30 which are mounted by a few bolts.

After the entire wire in a container has been consumed, a customer can dispose of the container in a convenient way. By unscrewing the nuts 34 from the bolts 32, the wooden blocks 30 can be separated from the container. This also results in the cardboard cover 20 becoming detached from the metal cage 10. Metal cage 10 can be sold as scrap metal. Cardboard wall 20 can be stored in a flat condition and finally recycled. The wooden blocks can be discarded. Accordingly, the customer does not have the problem what to do with an emptied container requiring much space.

## Claims

1. A container for accommodating an amount of welding wire (40), having a metal cage (10) with a floor portion and a side portion extending from the floor portion, and having a cardboard wall (22) associated to the side portion of the metal cage (10), wherein the metal cage (10) has an octagonal cross section **characterized in that** the cardboard wall (22) consists of eight segments.

2. The container of claim 1 wherein the floor portion consists of flat metal bars (12).

3. The container of claim 2 wherein the floor portion is formed from four bars (12) which are arranged pairwise perpendicular with respect to each other, the outer ends of the bars (12) defining eight corners of the container.

4. The container according to any of the preceding claims wherein the side portion consists of metal tubes (16).

5. The container according to any of the preceding claims wherein a reinforcement ring (18) is provided at an end of the side portion which is opposite the floor portion.

6. The container according to any of the preceding claims wherein the cardboard wall (22) is formed in a single piece extending around the side portion of the metal cage (10).

7. The container according to any of the preceding claims wherein supporting feet (30) are attached to the floor portion of the metal cage (10).

8. The container of claim 7 wherein the supporting feet (30) are attached by means of bolts (32) which extend from the interior of the container, and nuts (34) which are accessible at an outer surface of the supporting feet (30).

9. The container of claim 8 wherein the supporting feet (30) are made from wood.

10. The container according to any of the preceding claims, further comprising a dome (50) which is arranged at the end of the side portion of the metal cage (10) which is opposite the floor portion.

## Patentansprüche

1. Behälter für die Aufnahme einer Menge Schweißdraht (40), der einen Metallkäfig (10) mit einem Bodenabschnitt und einem sich ausgehend von dem Bodenabschnitt erstreckenden Seitenabschnitt und eine Wand (22) aus Pappe aufweist, die dem Seitenabschnitt des Metallkäfigs (10) zugeordnet ist, wobei der Metallkäfig (10) einen achteckigen Querschnitt hat, **dadurch gekennzeichnet, dass** die Wand (22) aus Pappe aus acht Segmenten besteht.

2. Behälter nach Anspruch 1, wobei der Bodenabschnitt aus flachen Metallstäben (12) besteht.

3. Behälter nach Anspruch 2, wobei der Bodenabschnitt aus vier Stäben (12) gebildet ist, die paarweise senkrecht zueinander angeordnet sind, wobei die äußeren Enden der Stäbe (12) acht Ecken des Behälters definieren.

4. Behälter nach einem der vorhergehenden Ansprüche, wobei der Seitenabschnitt aus Metallrohren (16) besteht.

5. Behälter nach einem der vorhergehenden Ansprüche, wobei an einem Ende des Seitenabschnitts, das zum Bodenabschnitt entgegengesetzt ist, ein Verstärkungsring (18) vorgesehen ist.

6. Behälter nach einem der vorhergehenden Ansprüche, wobei die Wand (22) aus Pappe aus einem einzigen Stück gebildet ist, das sich um den Seitenabschnitt des Metallkäfigs (10) herum erstreckt.

7. Behälter nach einem der vorhergehenden Ansprüche, wobei Stützfüße (30) am Bodenabschnitt des Metallkäfigs (10) befestigt sind.

8. Behälter nach Anspruch 7, wobei die Stützfüße (30) mittels Schrauben (32), die sich vom Inneren des Behälters erstrecken, und mittels Muttern (34), die an einer Außenfläche der Stützfüße (30) zugänglich sind, befestigt sind.

9. Behälter nach Anspruch 8, wobei die Stützfüße (30) aus Holz bestehen.

10. Behälter nach einem der vorhergehenden Ansprüche, der ferner eine Haube (50) aufweist, die an dem Ende des Seitenabschnitts des Metallkäfigs (10) angeordnet ist, das zum Bodenabschnitt entgegengesetzt ist.

## Revendications

1. Réceptacle pour la réception d'une quantité de fil à souder (40), comportant une cage métallique (10) présentant un tronçon de fond et un tronçon latéral qui s'étend à partir du tronçon de fond, et une paroi en carton (22) qui est associée au tronçon latéral de la cage métallique (10), la cage métallique (10) présentant une section transversale octogonale, **caractérisé en ce que** la paroi en carton (22) est composée de huit segments.

2. Réceptacle selon la revendication 1, dans lequel le tronçon de fond est composé de barres métalliques planes (12).

3. Réceptacle selon la revendication 2, dans lequel le tronçon de fond est formé par quatre barres (12) qui sont agencées par paires perpendiculairement les unes par rapport aux autres, les extrémités extérieures des barres (12) définissant huit coins du réceptacle.

4. Réceptacle selon l'une des revendications précédentes, dans lequel le tronçon latéral est composé de tubes métalliques (16).

5. Réceptacle selon l'une des revendications précédentes, dans lequel un anneau de renforcement (18) est prévu à une extrémité du tronçon latéral qui est opposée au tronçon de fond.

6. Réceptacle selon l'une des revendications précédentes, dans lequel la paroi en carton (22) est réalisée en une seule pièce qui s'étend autour du tronçon latéral de la cage métallique (10).

7. Réceptacle selon l'une des revendications précédentes, dans lequel des pieds d'appui (30) sont fixés au tronçon de fond de la cage métallique (10).

8. Réceptacle selon la revendication 7, dans lequel les pieds d'appui (30) sont fixés au moyen de vis (32) qui s'étendent depuis l'intérieur du réceptacle, et d'écrous (34) qui sont accessibles sur une face extérieure des pieds d'appui (30).

9. Réceptacle selon la revendication 8, dans lequel les pieds d'appui (30) sont réalisés en bois.

10. Réceptacle selon l'une des revendications précédentes, comprenant en outre un dôme (50) qui est agencé à l'extrémité du tronçon latéral de la cage métallique (10) qui est opposée au tronçon de fond.
